Europäisches Patentamt

European Patent Office

Office européen des brevets

(19)

(11) EP 0 789 258 B1

(12) EUROPEAN PATENT SPECIFICATION

(45) Date of publication and mention
of the grant of the patent:
**03.09.2003 Bulletin 2003/36**

(51) Int Cl.7: **G02B 27/00**, G01B 11/04

(21) Application number: **96500022.7**

(22) Date of filing: **09.02.1996**

(54) **Automatic measuring system of the wear of the overhead distribution contact wires**

Automatisches Messsystem für die Abnutzung von Stromdrähten

Système de mesure automatique de l'usure de conducteurs de courant aériens

(84) Designated Contracting States:
**AT BE CH DE DK FR GB GR IE IT LI LU NL PT SE**

(43) Date of publication of application:
**13.08.1997 Bulletin 1997/33**

(73) Proprietor: **RED NACIONAL DE LOS
FERROCARRILES ESPANOLES (RENFE)
28036 Madrid (ES)**

(72) Inventors:
• **Martinez Martinez, Pedro Manuel
28007 Madrid (ES)**
• **Aparicio Marzo, José Luis
28028 Madrid (ES)**
• **Garcia Molina, Salvador Federico
28670 Villaviciosa de Odon (Madrid) (ES)**

(74) Representative: **Ungria Lopez, Javier et al
Avda. Ramon y Cajal, 78
28043 Madrid (ES)**

(56) References cited:
• **PROC. IECON'93, vol. 3, 15 November 1993,
MAUI, HAWAI, pages 1997-2002, XP000437541 Y.
TORROJA ET AL: "An Artificial Vision System
used for the Measurement of the Overhead Wire
in Railway Applications"**
• **PATENT ABSTRACTS OF JAPAN vol. 6, no. 84
(P-117) [962] , 22 May 1982 & JP-A-57 023809
(NIPPON KOKUYU TETSUDO), 8 February 1982,**

## Description

### OBJECT OF THE INVENTION

As expressed in the title of this specification, the present invention, consists of an automatic measuring system of the wear of the contact wires of overhead distribution that, being of the type that is used in railway lines to plan the replacement of cables, bases its operation on the use of laser rays that are reflected vertically on the overhead distribution, and are captured by some cameras with automatic focusing; that are connected to an image processing system, to determine the width of the worn surface; and that has the purpose of making it possible to simplify the optical subsystem and lighting subsystem, strengthening the image processing subsystem, which leads to a lower cost and simplification of the unit, aside from allowing its expansion in the future very easily without making significant structural modifications, in such a way that it allows the measuring of the wear of the overhead distribution in each and every one of the points of any railway line.

### BACKGROUND OF THE INVENTION

The use of an opto-electronic system is conventionally known to inspect the state of wear of the overhead distribution of a railway track, that is installed in one of the cars of the train and that bases its operation on the use of laser beams that fall upon the bottom part of the cable or cables of the overhead distribution, on which the pantographs of the locomotives are supported, producing the wear of the cables by friction. The laser rays that fall upon said bottom part of the overhead distribution, are reflected and captured by some cameras provided with CCD sensors. These cameras automatically focus the overhead distribution, in such a way that the real image thereof is obtained.

The image captured by the cameras is processed to determine the width of the worn surface, determining the state of the overhead distribution.

The entire unit is mounted on a car that runs along the path to be inspected, for which purpose on the ceiling of said car an opening has been made through which the lighting and capturing of the image of the cables is made possible.

The optical and lighting subsystems used have a very elaborate and complex structure, that is complemented by the captured image processing subsystem, which, though complex, is simpler.

This structure determines greater difficulty, when the future expansion of the system for subsequent modifications is put forth, aside from the fact that the optical subsystem turns out to be more expensive than what is really needed to carry out the measurement of the width of the wear of the cable of the overhead distribution.

Article "An Artificial Vision System used for the Measurements of the Overhead Wire in Railway Applications" describes a system for measuring the wear of the overhead contact wire of a railway. The system is capable of measuring the cross section of the overhead wire without physical contact at high speed (160 km/h), with a rate of error less than 5%. The measuring method is based on an artificial vision system.

### DESCRIPTION OF THE INVENTION

In order to simplify the optical subsystem simplifying its cost and allowing an easy subsequent expansion of the system, the invention is characterized in that its laser lighting subsystem is formed by a plurality of identical modules placed horizontally and sideways to the image capturing cameras, each one of said lighting modules having laser, being comprised of a the laser diode which remains opposite a piano-cylindrical lens that forms the emitted light in a vertical plane.

After the plano-cylindrical lens there are two lenses in the horizontal plane that ensure the divergence that is required in this plane.

After the horizontal plane lenses and somewhat separated from them there is a support that fastens two mirrors one aligned with said lenses and the other one placed above the same and with a slant of about 45°.

After the laser emitter, there is a third mirror, that remains located in the space between the two above mentioned mirrors, in such a way that the beam of light makes a zigzag optical path guided by the mirrors, for

lengthening the optical path so that its size is suitable to light up an area that corresponding to each module;

achieving minimum distances between the components of the system so as to obtaina greater use of the space and better compactness of the system.

The optical path followed by a beam emitted by the laser lighting subsystem is independent from the optical path followed by a beam received by the image capturing subsystem.

The laser diode is connected to a NTC thermistor and to a Peltier cell. The thermistor and the Peltier cell are connected to each other, and in turn they are connected to a temperature control circuit that receives the signals coming the cell and from the thermistor, in such a way that it regulates the temperature of the laser, so that it functions at a constant temperature, since temperature variations during its functioning represent variations in the laser emission wave length, therefore this arrangement allows the emission of the beam of light to be carried out with a constant wave length.

Besides, the laser diode is related to a photodiode monitor that detects the emitted radiation, and they are connected to a control circuit to control the laser polarization current and therefore the emission strength thereof.

On the other hand, the image capturing subsystem comprises a plurality of cameras, each one of which faces a first surface mirror that is placed on a support at 45°, in such a way that the images are collected in the horizontal plane.

The first surface mirrors are placed on the support by means of a material that absorbs vibrations, and besides it has means to adjust the slant thereof, for the purpose of achieving the orientation suited to the capturing of images.

Between the lens and the CCD sensor of the camera, there is a labyrinth that ensures that the light that reaches the CCD sensor comes exclusively from the object, without it being possible for another type of available light to reach it.

The lenses are conventional and non-specific which greatly reduces costs.

Between the labyrinth and the CCD sensor there are a plurality of interferential filters for allowing only the radiation comprised in the through band thereof to go towards the sensor, said radiation being specific for each camera, therefore they are not interchangeable, in such a way that if the positions thereof are altered, it is necessary to readjust the adjacent lasers. Therefore, the equipment can function when there is no light (at night) or when there is too much (at high noon) without any problems.

The automatic focusing subsystem is characterized in that it is formed by a D.C. motor capable of being operated manually by means of a remote control or by means of push buttons, to carry out the initial focusing, from which the focusing is done automatically.

The automatic focusing is controlled by a control circuit, that is connected to the D.C. motor, which in turn is connected to a worm, in such a way that upon activating the motor, a frame, to which a plurality of platforms supporting the cameras are integral, moves. Each one of said platforms is mounted on an individual carriage capable of being operated by hand by means of a plurality of positioning controls in three axis, in such a way that it enables adjustment of the optical capturing subsystem slightly overlapping the fields of vision of the cameras, upon activating the individual positioning controls in each one of the three axis of each one of the cameras.

Once the initial adjustment and manual focusing have been carried out, one activates the control circuit switching its manual focusing to automatic focusing. At this point, a mixed analogic/digital loop for controlling a position of the motor (45), comprises:

a circuit based on EPROM (37) including calculating means for digitally calculating a reference position of a distance between a contact wire and a camera lens (62), from which a distance between the camera lens (62) and the CCD sensor is calculated, thus providing a calculated signal;
comparing means for comparing the calculated signal with a measured signal provided by measuring means;
subtracting means for generating a difference signal resulting from subtracting the measured signal from the calculated signal;
means for applying the difference signal to the motor (45) forcing both compared signals, the calculated signal and the measured signal to be equal, whereby the frame (24) is correctly placed for automatically focusing.

The analogic control loop is formed by a differential encoder that in turn is connected to the motor, generating pulses when the motor turns, in such a way that it indicates the relative position of the frame with regard to the initial focus obtained manually.

The differential encoder is connected to the detector (47), said detector (47) being connected to two inputs of
the meter (49), wherein the calculated signal has been previously loaded after carrying out an initial focusing, so as to obtain in the meter (49) output a signal proportional to a position the motor has with regard to an initial position of the frame, said signal being applied to an input of
the digital/analog converter (50) with an output connected to the first input of
the comparator (52), which receives the on the second input an analogic signal of a distance between the camera lens (62) and the CCD sensor in each moment, the comparator (52) providing a difference signal that, after passing through the adjuster (51) and the compensator of dead spots (43), is applied as a speed signal to
the direct current/direct current converter (44) for controlling rotation of the motor (45) so as to position the frame in a suitable point to focus.

The connection of the detector of the direction of rotation of the motor, to the clock of the meter is done by means of a divider, considering that the field depth of the cameras does not have to be very precise in the signal coming from the analogic loop, in this way a resolution of positioning resolution more suitable to the field depth of the camera is obtained, simplifying the digital/analogic converter connected to the comparator output.

On the other hand, the feed subsystem of the different subsystems that comprise the invention, is defined by a plurality of voltage sources, that from the line voltage different voltages of operation are furnished for the subsystems of the invention.

Each one of the voltage sources is connected to
a network by means of suitable filters,
a voltage sources control circuit (56) and to
a supervision circuit (57), the voltage sources control circuit (56) and the supervision circuit (57) being connected to
a state memorizing circuit (58), that in turn is connected to

a time starting circuit (59) and to

a display (60);

so as to

upon connecting the feed subsystem, a temporized initiation be produced during which the sources (55) do not have output voltages to avoid initial transient from influencing said output,

after carrying out the initiation, the voltage sources be activated and a period of time afterwards, the supervision circuit, for ensuring that the supervision circuit functions when all the voltages are established,

deactivate all voltage sources if an anomaly is produced in one of the voltage sources, all incidences being indicated optically.

All of the timing, starting incidences and the rest are, likewise indicated optically in such a way that the operator knows what is the state of the feed subsystem, detecting the anomalies instantly.

Some of the voltage sources, and more specifically those used for the laser lighting subsystem require a sequential start to be carried out, for which purpose the source control circuit is connected to a sequential starting circuit, which in turn is connected to the voltage sources that must function with this type of start, each one of these sources being connected to the source supervision circuit that is connected to the state memory , correctly controlling the sequential starting of these sources.

Just as it has already been indicated, the captured images are processed by the image processing system. Now then, this processing subsystem is defined by a plurality of transputers that operate in bridge, and that are connected to a personal computer for communication with the operator.

Each one of the connection lines with the personal computer, is divided in four image processing levels.

The first level is comprised by the detection of images of each camera whose task is to detect the possible impressions and to send to the next level only the portion of the image that contains them.

The second level carries out the measurement of the detected impressions and is comprised of a number of modules lower than the number of modules used in the first level.

Each measuring module of the first level communicates with two modules of the second level, with the particularity that the end modules of the first level are communicated with two of the second level, the ones farthest apart from each other. The communication of the first level with the second level uses the most direct communication line, except when said line is busy, a circumstance that makes it necessary to use another line, which is the one farthest away, which causes better usage of the transputers, since when the impression is in an end, normally there is no impression in the other one, thus the transputer corresponding to this end is normally inactive. In this way, the speed and capacity of the system are increased.

The third level is of composition and it classifies the data processed in the previous level, since in the previous level as well as in the first one, the operations are carried out in any order to obtain greater processing speed, and the data is sent as soon as it is ready wherever it is possible to do so, therefore, the data arrives out of order in space and time. The reclassification is possible thanks to the information that accompanies the measurements. In this way, at the output of the third level, the measurements have a fixed format and are perfectly in order.

The fourth level is comprised by making the history and supervision control as well as the control of the entire network, this level being the only one that communicates with personal computer.

The fourth level is also responsible for setting off the cameras and monitoring the mistakes that could have been produced during transmission, errors that have to be corrected. Besides, it classifies all the operations to be carried out with the external devices, with the personal computer as well as with the cameras, table, focusing, gates, etc. Besides, it is responsible for storing in the hard disk and of the interface with the user; graphic outputs, alarms keyboard control.

The personal computer acts as a mere intelligent peripheral and is connected to the network by means of a serial/parallel interface. The task of the personal computer consists of providing the system with resources such as the handling of the disks, graphic display and the keyboard. For this purpose a program that carries out two tasks runs in it: initially it loads each transputer with the corresponding program; then it manages all the requests of the network.

The image processing subsystem

acts independently from the speed of the car in which it is installed always taking the same number of images per second;

said number of images being available to be varied so as to obtain a desired number of images per unit of length.

The processing subsystem is connected to some auxiliary peripherals comprised of a digital/analogic converter that receives the measurement of height, to some link buffers of the cameras, to the digital/analogic converter for self-focusing, and to a kilometric point meter.

Now then, all these peripherals are controlled by a fifth level, in which no image processing takes place, but rather it carries out the management of input and output for the peripheral control.

It is essential to know the height for two reasons: the first one is the apparent size of objects varies with distance and the second one is that the overlapping of cameras also varies. To know the real size of an impression and in order to distinguish which of them are doubles of other ones for each shoot it must be accompanied by the height of the contact wire that supplies the operating voltage of the train.

In this way, the measurement of the real impression of the overhead distribution of an entire path is obtained, associated to the position thereof on the track, making graphs of said impression with regard to said position, which determines the impression existing in the overhead distribution of an entire path it being possible to make forecasts regarding replacement of the cable.

Hereinafter to provide a better understanding of this specification and forming an integral part of the same, a series of figures in which the object of the invention has been represented in an illustrative and non-restrictive manner is attached hereto.

BRIEF DESCRIPTION OF THE FIGURES

Figure 1 is a perspective view of the system object of the invention, wherein neither the image processing subsystem nor the feed subsystem have been included.

Figure 2 is a side view of a module of the laser lighting system.

Figure 3 is a block diagram of the laser diode formed by a temperature control and a power control.

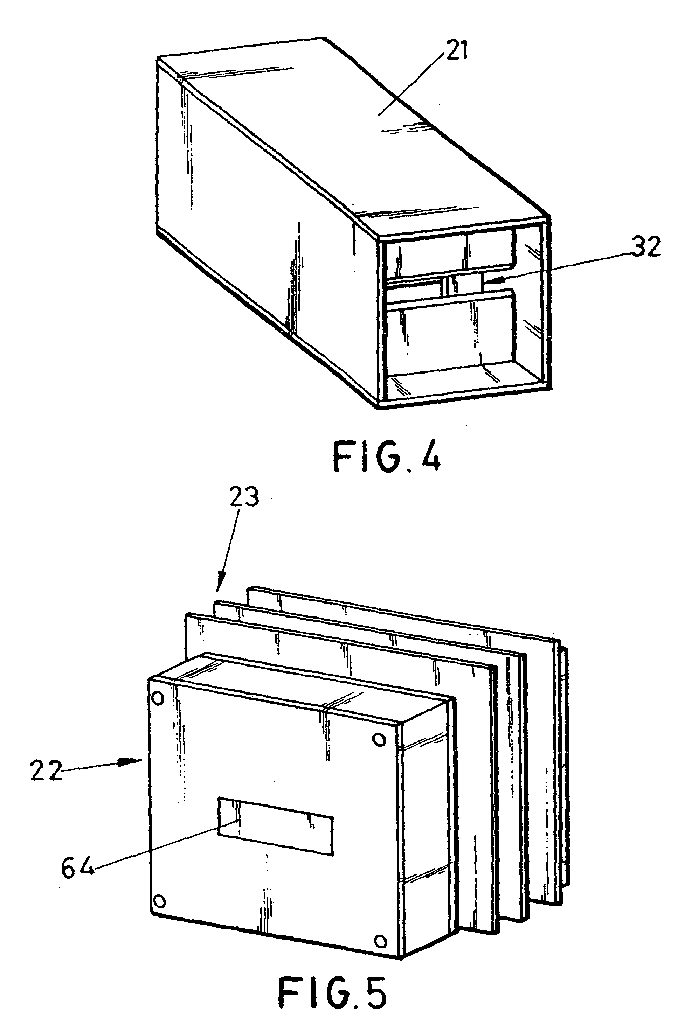

Figure 4 is a rear perspective view of the labyrinths used in the optical image capturing system, that remain fixed in position by placement thereof in the supports of the lenses, one only having to be careful that one lets light pass freely through the rear groove in which there is a box that contains the filter and CCD sensor.

Figure 5 shows a perspective front view of the box that contains the filter and CCD sensor, having a groove in its front part that must coincide with the one in the rear part of the labyrinth.

Figure 6 is a perspective view of the mechanical self-focusing part defined by a frame in which there are independent carriages that allow a small manual movement of the cameras in three axes, that provide adjustment of the optical image capturing system in order to establish a certain overlapping if the fields of vision of the cameras.

Figure 7 is a block diagram of the control circuit that allows for self-focusing.

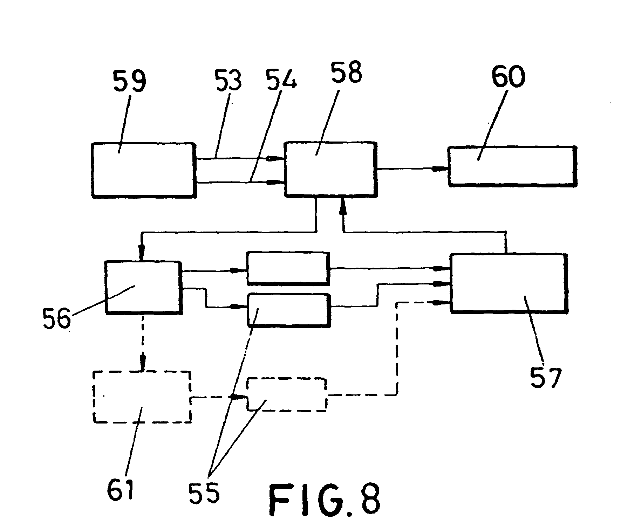

Figure 8 shows the functional block diagram of the feed subsystem and protections that provide all the operating voltages of the system of the invention.

DESCRIPTION OF AN EMBODIMENT OF THE INVENTION

Hereinafter a description is made of the invention based on the above cited figures.

Just as it has already been commented on, the measuring system of the wear of the overhead distribution contact wires of the invention, is especially applicable to determine the wear of the wires of the overhead distribution of railway lines, for which reason it is of the type that is based on the principle of obtaining, by quasi-regular reflection of the optical image of the impression of the contact wire. When this reflection of light is achieved in practically regular conditions, the visualization of the edges of the impression, in other words, the width thereof, is perfect, since the change of curvature in the cross-section of the wires of the overhead distribution is taken advantage of.

In order to achieve the above mentioned reflection, a laser ray emitting subsystem (4) that is comprised of a series of identical modules that are located sideways to the image capturing optical system (2) is used. The focusing of the optical image capturing subsystem (2) is done automatically, processing the captured image by means of a processing subsystem, to determine the width of the worn surface.

All these characteristics are known and the operation of the invention is based on them but with a structure of the different subsystem different from the one used up to now.

Hence, the optical image capturing system (2) as well as the laser lighting subsystem (1) and the automatic focusing subsystem are mounted on an optical table (3) that remains located inside the car.

Said table remains placed horizontally and located under a groove made in the ceiling, in order to allow lighting and obtainment of the image of the overhead distribution, just as it will be described hereinafter.

Hereinafter each one of the subsystems that comprise the invention which are the following, will be described:

- Laser lighting subsystem (1)
- Optical image capturing subsystem (2)
- Automatic focusing subsystem
- Transputer processing subsystem
- Feed subsystem and protections

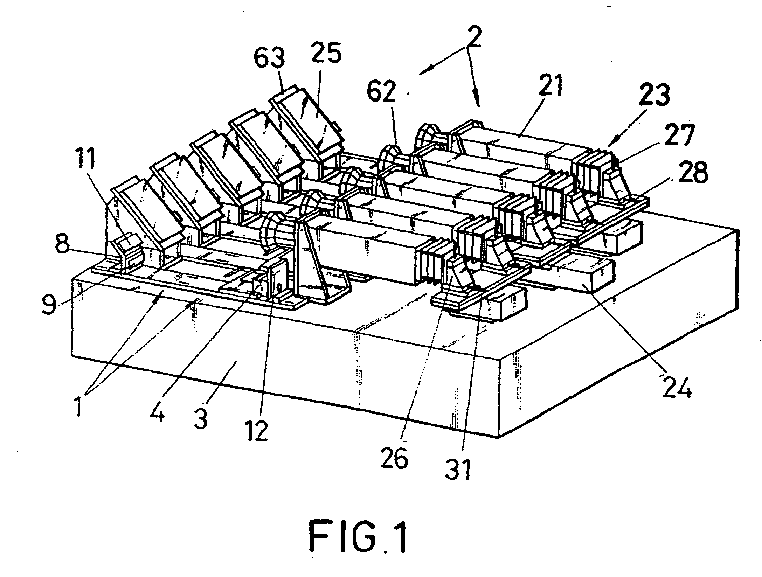

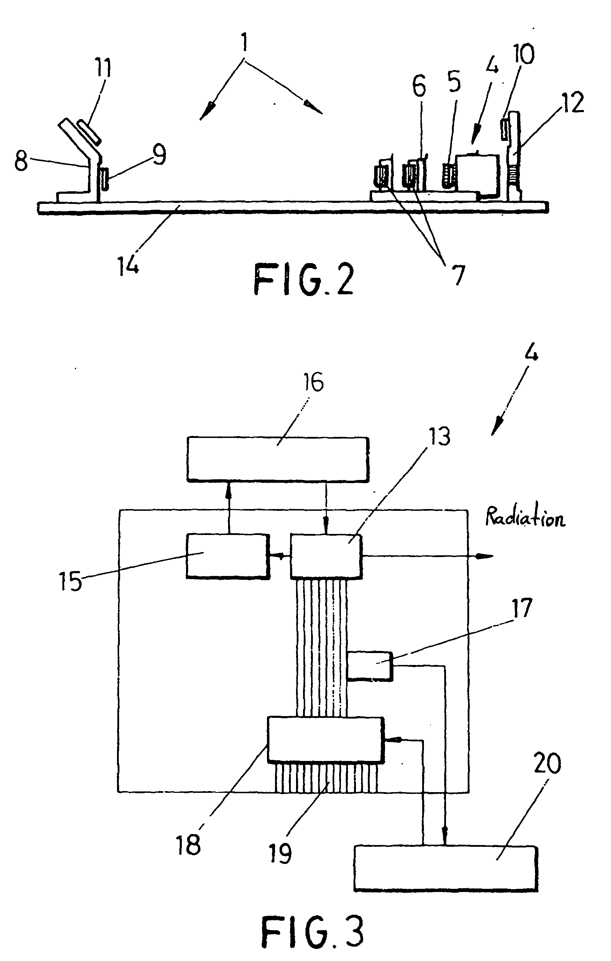

First of all, the laser lighting subsystem (1), which has been represented in figures 1, 2 and 3, is described.

The laser lighting subsystem (1) is comprised of six identical modules placed sideways to the optical image capturing subsystem (2), which is defined by five identical modules.

The number of modules can vary in terms of the needs.

Each one of the modules that comprise the laser lighting subsystem includes as a light source (4) a laser diode (13) of 500 mW of maximum emitting power at a central emission frequency, at 25° C, around 810 nm, in a band width of 2nm.

The radiation emitted by the laser diode (13) is concentrated by a first converging plano-spherical lens (5), that reduces the output divergences by about 50%, thus making it possible to make use of almost all of the power of the radiated light.

The beam of light emerging from the converging plano-spherical lenses (5) is formed on the vertical plane by means of a positive plano-cylindrical lens, which remains located in such a way that the beam that emerges from it has the least possible divergence.

The optical path followed by a beam emitted by the laser lighting subsystem (1) is independent from the optical path followed by a beam received by the image capturing subsystem (2).

The lenses (7) that ensure the required horizontal divergence are placed on the horizontal plane.

Facing these latter lenses is a support (8) in which the mirrors (9) and (11) have been included.

Likewise, in the rear part of the light source (49 there is a frame (12) that supports a mirror (10), in such a way that the beam of light falls on the mirror (9) and is reflected towards mirror (10) from which it is reflected towards mirror (11), following a zigzag optical path, for

lengthening the optical path so that its "horizontal size" (which is crosswise after mirror (11)) is the suitable one to light up the area that corresponds to each module;

achieving minimum distances between components of the system so as to obtain a better use of space.

Each module, with its card constitutes a complete unit that can be moved from its housing on the table for repair, adjustment, etc.

This entire unit remains placed on a frame (14) that is fastened to the optical table (3).

The laser diode itself (13), already commented on above, is connected to a photo-diode monitor (15) that is placed in the rear part of the unit (4) and it detects about 10% of the useful radiation emitted by the laser, in such a way that by means of the detection carried out it is possible to control the polarization current of the laser diode through an electronic control circuit (16), which in turn is connected to the laser diode (13) to control the emission power thereof.

The laser matrix (13) is mounted on a Peltier cell (18) which combined with a NTC thermistor (17), that carries out temperature sensor functions, allows the laser diode to operate at a constant temperature, by means of an external temperature control circuit (20). This operating temperature control is very important when the matrix is used in applications where a very refined wave length value is required, such as in the present case, due to the fact that the wave length varies with temperature. It is estimated that the wave length variation in terms of temperature is around 0.2 to 0.3 nm/°C.

As the temperature rises, the output power of the laser diode (13) drops, therefore, it is also necessary to carry out a temperature control.

In order to carry out this temperature control the NTC thermistor (17) with the Peltier cell (18) define a refed system that allows the setting of the connection temperature independently from the value of emitted power or outside temperature.

The Peltier cell is a thermoelectric device that acts like a reversible heat pump, in other words, it cools or heats depending on the direction of the current that passes through it.

Reference (19) indicates heat guides.

Upon the above cited elements a liquid crystal display for showing temperature indicates an operating temperature of each diode. Due to the delicate construction process between laser diodes, it is very difficult to make two alike, therefore, the electric characteristics vary from one diode to another, thus the current and the voltage that must be applied to leach laser varies, thus, it is necessary to gauge each one independently, it not being possible to exchange them once the gauging has taken place.

In the event that one is replaced by another one, gauging must take place again.

The difficulty of adjustment increases due to the infrared nature of the light, which makes it necessary to use a video camera sensitive to infrared light or some sensor sensitive to this light in order to be able to visualize radiation during adjustment. One must take special care so that the radiation does not directly hit the human eye, since it can cause damage.

On its part, the power control is done by current control, since the power emitted is proportional to the injected current.

Therefore, the basic power control circuit is comprised of an adjustable current source; likewise a liquid crystal display for showing power indicates an operating power of each diode.

In this way, it makes it possible to adjust the laser diode emission subsystem (4), carrying out the previous pertinent gaugings, that are not described in this specification as they are not an object of the invention.

The optical image capturing subsystem (2) is described hereinafter. The optical image capturing subsystem is formed by five identical modules whose optical axes are separated 200 nm from each other.

Each module is basically defined by a conventional high speed photographic camera, provided with a conventional lens and a CCD sensor.

The optical axis is placed horizontally and is directed vertically by a first surface mirror(25)inclined 45°.

The first surface mirrors (25) are placed on a support (63), which upon being close to the lens, a small variation in its position greatly influences the location of the "object". For this reason the support (63) is especially strong and the same can include fine adjustment of the mirror in the two axes by means of screws. Once the position has been adjusted the mirror-support connection is sealed with silicone to prevent undesired relative movements. In any case the permanent elasticity of this sealing with silicone allows any subsequent small readjustment of the mirror.

The lens (62) remains fastened and after it, given its large viewing angle, there is an optical labyrinth (21) especially designed and built for this use, by means of which it guarantees that only the light that passes through the lens and that comes from the object reaches the CCD sensor without it being possible to capture light, that through the lens, comes from areas that do not correspond to the object. As it is known this "object" is the image that of the CCD given by the lens in the object plane that, at the nominal height is a horizontal crosswise to the track axis.

The labyrinths rest on the same support as the lenses and are painted inside and outside with dull lamp black color paint.

The light coming from the labyrinths (21) comes out through a groove (32) made in the rear part.

After the labyrinth (21), in the optical path, and located on the support (22), wherein the CCD sensors are located, but with their own housing, there are interferential filters (23) that only allow the radiations comprised in the through band thereof to reach the sensor. Nonetheless, the difficult construction thereof makes it necessary to know the specific data and values of each unit, which are furnished by the builder. This data is important and makes it necessary to have each filter on its camera or, in other words, to "tune" each laser diode with its filter. Nonetheless, and given the monochromaticity of laser emitters, in practice it is not especially difficult as long as the thermal stability of the diode can be guaranteed, which was done with the temperature control circuit (20) explained above.

Due to all of this, the interferential filters (23) are not interchangeable and if their positions are altered it is necessary to readjust the adjacent lasers.

The CCD sensors have associated the 'electronics corresponding to the control of the module and matching of the signals supplied by the module to the image processors defined by transputers that will be described hereinafter. Likewise, it includes a module feed supervision system.

In the support (22) of the intereferential filters (23) a groove (64) that coincides with the groove (32) provided for in the rear part of the labyrinths (21) has been provided for.

Obviously, the entire system needs to make an adjustment and verification and gauging of all the CCD cameras, which are not described as they are not an object of the invention.

This structure allows the system to function during the day or at night indistinctly.

Hereinafter the description of the automatic focusing system is made.

Just as it has been explained above, it is necessary to maintain the focus of the optical system, to ensure correct operation of the entire system on the whole.

An impression out of focus causes some very slow rising flanks, which converts into an incorrect measurement of the width thereof. Besides, the width of the impression out of focus depends on the level of comparison used. Thus, it is necessary to ensure at all times, the image of the object to be examined, in this case the contact wire, is formed right on the physical plane where the CCD cameras are. For this purpose it is necessary to solve the optical equation:

$$P' = \frac{P \times F}{P - F}$$

wherein

P = the distance from the object to the lens
P' = the distance from the lenses to the image
F = the focal distance to the lens

The optical resolution is defined as: that which determines the relation of size between object and image.

In the specific case of the invention, the distance between the object and the lens P, is the height of the contact wire, therefore it is necessary to determine said height, which is done by a peripheral as it will be described hereinafter.

Likewise, the distance between the lens and image, P', is the distance from the lens to the CCD sensor. To maintain a correct focus, for each distance P between the contact wire and the lens, it is necessary to position the CCD cameras of the lenses at their corresponding distance P'.

Given that the relation between P and P' is not linear, an immediate and simple electronic circuitry is not possible to determine the positioning of the lenses and therefore the focus of the system.

Given the need of focusing of the optical system, in terms of the height of the contact wires, the problem is posed of mechanically positioning the CCD cameras at the suitable distance from the lens.

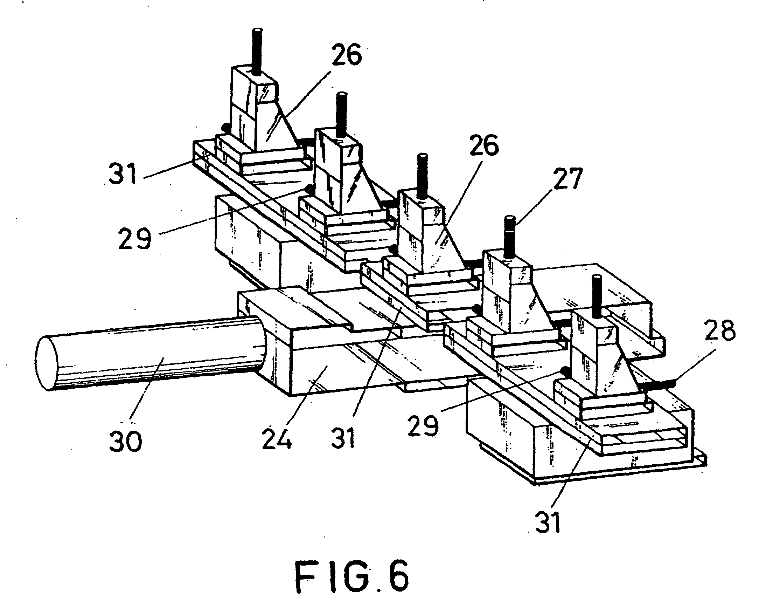

The mechanical part of this focusing system has been represented in figure 6 and which is comprised by a frame (24) placed in a center position on the optical table, that includes a worm (30) that is activated by a continuous current motor.

Some platforms (31) have been provided for on the frame (24): two side ones and a center one, that are coupled together, in such a way that single movement according to axis Z is made possible.

On the platforms (31), there are five individual positioning carriages on the X, Y and Z axes, that, in turn, support the complete CCD cameras, thus making the individual positioning thereof possible; for initial adjustment.

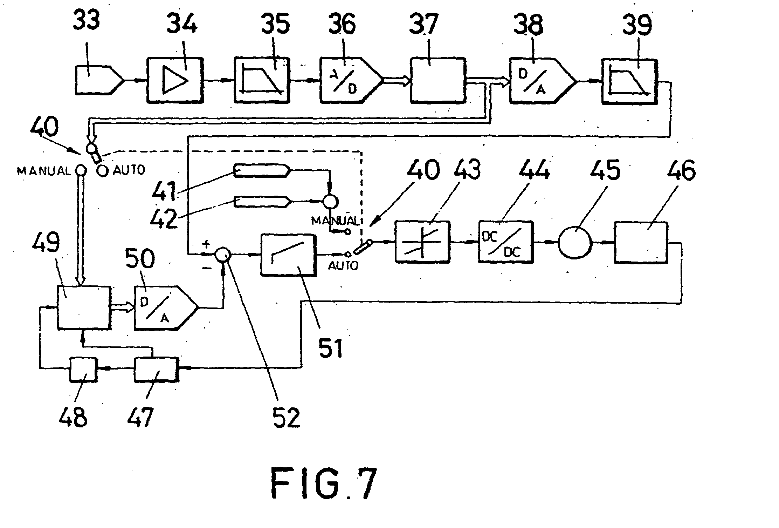

With regard to the electronic control of the self-focusing system, its block diagram has been represented in figure 7 that is comprised of the peripheral that determines the height of the contact wire and more specifically the distance between it and the lenses, which is represented by module (33), that is connected to an amplifier (34) and the latter to a filter (35) whose output is applied to a digital/analog converter (36) which in turned applied to an EPROM from which the distance from the CCD to the lenses is obtained with a digital value, a signal that is converted into analogic by means of the converter (38) and conveniently filtered by module (39).

The signal coming from the filter (39) is applied to a comparator (52) whose output is applied to a regulator (51) that after a switch (40) by means of which it goes from the manual focusing position to the automatic focusing one, it is applied to the motor (45) through a compensator of the dead spots (43) of the motor and of a converter of continuous current to continuous current (44).

The output of the motor (45) is applied to an encoder (46) and this is in turn applied to a detector of the direction of rotation (47) which is connected to the ascending-descending count input of a meter (49) and to the clock input of the meter, by means of a divider (48).

The meter (49) is connected by a switch (40), that determines the automatic or manual operating position to the memory (37) output.

Once the structure of the block diagram has been described, the operation thereof is going to be described.

Based on the described structure, one can clearly distinguish two parts in the block diagram. A first part that positions the focusing table in a specific reference point. The real position of the table is attained by means of the encoder (46) that is incremental and not absolute, therefore the positioning of the table is relative to its original location, which is understood to be the position of the table when the control loop is open, which is the same as indicating that we are in manual mode; and consequently without position adjustment which would correspond to the automatic mode. The second part is comprised by the generation of this reference point that corresponds to the solution of the optical equation, where the table must be positioned.

The adjustment loop works with the signal coming from the filter (39), as the position recognition signal and the signal coming from the digital/analog converter (50), which is the real position signal of the focusing table. The signal coming from the filter (39) is generated in terms of the height of the contact wire; while the signal coming from the digital/analog converter (50) is calculated by counting the pulses provided by the incremental encoder (46) that is placed in the shaft of the motor (45), which moves the frame (24) that has also been named in this memory table.

The output of the incremental encoder (46) is applied to a detector of the direction of rotation (47), in such a way that it indicates to the meter (49) that carries out an ascending or descending count, on the initial value in storage through its load input after positioning in the switch (40) in the manual position, whereby the signal coming from the memory (37) is stored in the same.

Besides, the output of the detector of the direction of rotation (47) is applied to the clock input by means of a divisor by 16, this is due to the fact that the incremental encoder (46) provides a pulse/$\mu$m, and if this output were used directly, we would obtain with it positioning solutions in the neighborhood of one $\mu$m, with which it would be necessary to use analog/digital and digital/analog converters (50) of many bits. Taking into account that optics has a deep focus, which in the specific embodiment is 20 $\mu$m, the table is positioned with a precision of 16 $\mu$m. For this purpose, the pulse output of the encoder is divided by 16. In this way the necessary converters need many less bits, greatly simplifying the structure thereof.

The detection of the direction of rotation is done by means of a relatively complicated circuit. · Due to the position of the encoder (46), in the stopping point of the motor (45) (stop due to the adjustment loop, not a stop due to feed disconnection in the terminals of the same), transitory pulses can be produced which are to be taken into account thus said circuit has been designed as a sequential nonsynchronous-synchronized circuit and implemented in a PAL.

The difference between the real position and the reference position signals determine an error signal, which is introduced in the adjuster (51) obtaining at the output of the same the control signal, in speed, that attacks the continuous current converter to continuous current (44) that governs the motor (45.) Due to the dead spot that the motor has, the output of the adjuster (51) passes through a block that compensates said effect, obtaining at the output of the same the speed recognition signal that really attacks the continuous current converter to continuous current (44).

The analogic signal that represents the contact wirelens distance, is digitized in the converter (36) that represents the distance P. This digital signal directs a memory position in the EPROM (37), where it is recorded, the value that must take the distance between the object and the CCD, P'. This data corresponds to the solution of the above mentioned optical equation, and it is taken as the reference position for the optical table.

Therefore, after subsequent treatment, digital/analog conversion (38) and filtering (39), at the output of the latter, the reference signal is obtained in the analogic manner, signal that is used as a recognition in the positioning loop.

Reference (41) represents manual control and reference (42) represents the reference provided by the personal computer connected to the transputers of the image processing system, that will be described later on.

Therefore, in order to carry out the manual and automatic focusing, due to the fact that the encoder (46) is incremental and not absolute, it is necessary to act in a particular way before entering with the closed loop control. When the equipment is connected, it is necessary to make a manual focusing positioning, placing the control system in the manual position. Once the initial correct focusing has been done, controlled by the transputers, the correction initial positioning is achieved.

With the open loop, the reference position value, determined at the output of the EPROM (37) is loaded in the meter (49) that measures the table position. In this way it is ensured that the control loop starts from a correct position. The error signal at that moment is null since the signals applied to the comparator (52) have the same voltage, and when the loop -closes (automatic position), the incremental positioning control is carried out with regard to the position established manually.

Manual movement of the table (manual position) can be done from the personal computer itself established by the input (42) or from an external control, established by the input (41), that consists of four push buttons for advancing in both directions slowly and rapidly.

In this way, once the manual adjustment of the system has been done, the self-focusing of the contact wires is carried out, for which purpose the self-focusing control circuit

uses a mixed analogic/digital loop to control the position of the motor (45);

by means of a circuit based on EPROM (37) carries out a digital calculation of a reference position of the distance from a contact wire to the lens (62). from which the distance that must exist between the lens and the CCD sensor is calculated;

compares this signal with the signal of the loop;

generates a difference signal that acts upon the motor (45) forcing both compared signals to be equal, whereby the frame (24) is correctly placed in order to achieve automatic focusing.

The feed subsystem is comprised of a series of sources (55) that are connected to the network by means of the corresponding filter.

Each one of these sources (55) is connected to
a control circuit (56)
a supervision circuit (57), these two being connected to
a state memorizing circuit (58) that in turn is connected to
a time starting circuit (59) and to
a display (60).

The timed starting circuit (59) has two outputs (53) and (54). Signal (53) is used to adjust to zero the memory (58) of the state of the sources, therefore all the sources are connected to a voltage of 220 volts, the output thereof remaining inhibited. In this way it is prevented that the transitory one, due to the connection of the transformers, influences the output of the sources. The supervision system (57) informs about the state of the sources from the first moment, therefore the visualization (60) will be of failure of all the pilot lights, for example red ones (lack of voltage). Once the adjustment to zero (about 4 s) has taken place, the source control (56) activates each one of them simultaneously or by means of the sequential starting block (61), that will be described hereinafter. The visualization system indicates the correct starting of the sources, the pilot lights turning green for example. Finally, the second control signal (54) activates the protection system for example 0.5 s after establishing all the voltages, in such a way that if any of the voltages is not present or fails later on, the anomaly is memorized and all the sources are immediately turned off. Then one can see in the display the source causing the error in red color and the rest remains green.

In the case of the feed sources of the laser diodes, they require sequential starting therefore the source (55) corresponding to the indicated subsystem is governed from the source feed circuit (56) through a sequential starting circuit (61), producing the sequential starting control of the source.

Hereinafter a description is made of the operation of the captured image processing subsystem.

This subsystem is comprised of a series of transputers that have been connected forming five lines, that converge in the personal computer.

Each line is divided into four numbered image processing levels.

The first level carries out the detection of the images of each camera, and its task consists of determining the possible impressions and sending to the next level only the portion of the image that contains them.

The second level carries out the measurement of the impression and it is formed by four modules, unlike the first level that is comprised of five. The number of modules of this level is smaller since the total image has been reduced eliminating the portions that do not contain the impression. Each first level module is communicated with two of the second level the farthest away from each other as possible. For example: the first level module of one end is connected to the module of the same end and that of the other end of the second module. The processing line will normally be more direct, but if the corresponding transputer is busy measuring an impression, another line is used. Going on with this example, given that when the impression is in one end the normal thing is that there is nothing in the other end. A transputer, which would otherwise be under-used, is taken advantage of. In this way, together with the performance of the transputers, the speed and capacity of the system is increased.

Level three carries out the composition of the measures taken and only the measurements of the impressions that have been detected reach it: only the first two levels work directly with pixels. In the two bottom levels the order of the data is not taken into account, to achieve maximum speed, the results are sent as soon as they are ready wherever it is possible to do so. Therefore they arrive out of order spatially and in time. Thanks to the information that accompanies the measurements it is possible to reclassify them and to change them to an absolute reference (up to now they have had a relative reference to the camera to which they belong.) At the output, the measurements have a fixed format and are perfectly classified.

The fourth level is comprised of the history and control level and it controls the entire network and supervises the conveyance of the data through the same. It is formed by a single transputer which is the master of the system. The network have several states according to the task that is being carried out. Going from one to another is done by the messages that are sent from here and that are distributed along the entire network. It is also responsible for setting off the cameras and monitoring the errors that could be produced during transmission and it is responsible for correcting them. It orders all the operations without external devices, with the personal computer as well as with cameras, focusing table, height converter, gates, etc. This transputer is the only one that communicates directly with the personal computer, therefore it is responsible for the storage in hard disk and interface with the user: graphic outputs, alarms and keyboard control.

The personal computer acts as a mere intelligent peripheral. It is connected to the network by means of the serial/parallel interface and its task is to provide to the system resources such as management of disks, graphic display and keyboard. For this purpose, a program that carries out two tasks runs in it: initially it loads each transputer with the corresponding program, then it attends to the requests of the network.

The fourth level does not directly manage the peripherals developed for the system, which consist of the kilometric point detector, measured from the height of the overhead distribution, number of contact wires among others.

The image processing subsystem

acts independently from the speed of the car in which it is installed always taking the same number of images per second;

said number of images being available to be varied so as to obtain a desired number of images per unit of length.

The image processing subsystem is connected to a plurality of auxiliary peripherals comprised of

an analog/digital converter for receiving a measurement of height

a plurality of link buffers of the CCD cameras;

a digital/analog converter for self-focusing;

a kilometric point meter, so as to obtain a real impression associated to a position on the track.

These peripherals are controlled by level (5) with a weaker transputer, but that makes it possible to go from any format to the standard link and, in turn, to unload the master transputer of work. The fourth level gives orders and the fifth level carries them out.

The fifth management level of inputs/outputs for managing the peripherals is included in an image processing subsystem.

Another one of the peripheral connected to the personal computer is comprised by the link buffer which is designed to work in calm electromagnetic environments, that is to way without noise and interference. The functionality of the model based on transputers depends on the infallibility of these links, since it is not foreseen that they try again a communication that has failed. At the card level it is not necessary to use exciters, but it is necessary to do so for remote communications of meters, about all in environments as noisy as a train.

Besides the transputers carry out the postprocessing of the measurements of the impressions acquired, therefore there are four main programs to manage the data generated by the transputers and its purpose is to obtain the real value of the impressions, eliminating overlaps and false reflections. The measurement is expressed in millimeters (for each height the resolution is different). Finally, for each impression to which the cable belongs (left or right depending on the direction of running), or, if on the contrary, it is a new cable due to the presence of needles or sectioning.

Once the processing of each image has ended, the result is stored, it being able to be printed out in the format this is desired in order to interpret the details of the impressions.

**Claims**

1. An automatic measuring system for measuring wear of overhead distribution contact wires being of the type that are used in railway lines,

using laser rays that fall upon a bottom part of at least one cable of the overhead distribution on which pantographs of locomotives are supported and on which said laser rays are reflected;

the laser rays being captured by a plurality of cameras installed in an image capturing subsystem (2), the cameras being provided with CCD sensors and camera lenses (62) ;

said CCD cameras automatically focusing the overhead distribution by means of an automatic focusing subsytem;

an image processing subsystem processing a captured image to determine the width of a worn surface;

the system being mounted on a car that runs along a path to be inspected, a hole in the ceiling of the car being made to allow lighting and capturing the image of the at least one cable;

a laser lighting subsystem (1) comprising a plurality of identical modules placed horizontally on sides of the CCD cameras;

each module being comprised of a laser diode (13) whose emission of light is formed on a vertical plane by means of a positive plano-cylindrical lens (6) followed by two lenses (7) in a horizontal plane for ensuring divergence required in said plane;

a beam emitted by the laser lighting subsystem (1) following an optical path independent from an optical path followed by a beam received by the image capturing subsystem (2);
**characterized in that** the image capturing subsystem (2) comprises,

a plurality of CCD cameras;

a plurality of first surface mirrors (25);
wherein

each CCD camera is located opposite each first surface mirror (25);

each first surface mirror (25) is placed on a support (63) at 45° on a material provided with

cushioning means for absorbing vibrations; and

adjusting means for allowing subsequent fine adjustments;

each CCD camera is provided with

a labyrinth (21) between the camera lens (62) and the CCD sensor for ensuring that light reaching the CCD sensor comes from the camera lens (62) without it being possible for other available light to reach it;

a plurality of interferential filters (23) between the labyrinth (21) and the CCD sensor for allowing only radiation comprised in a through band thereof to reach the sensor, said radiation being specific for each camera.

2. An automatic measuring system according to claim 1, **characterized in that** a beam projecting from the two lenses (7) follows a zigzag optical path guided by mirrors (9, 10, 11), for

lengthening the optical path so that its size is suitable for lighting an area corresponding to each module;

achieving minimum distances between components of the system so as to obtain a better use of space.

3. An automatic measuring system according to claim 1, **characterized in that** the automatic focusing subsystem comprises a D.C. motor (45)

capable of being operated by hand or automatically by a control circuit,

connected by means of a worm (30) to a frame (24) so as to move the frame (24) where a plurality of platforms (31) supporting the cameras are located,

each one of said platforms (31) being mounted on an individual carriage (26) capable of being operated by hand by means of a plurality of positioning controls (27, 28, 29) in three axes for initial adjustment, for

enabling to carry out an initial focusing manually or automatically,

adjusting an optical capturing system slightly overlapping fields of vision of the cameras,

so as to then allow switching the control circuit operating into automatic focusing simultaneously for all of the cameras.

4. An automatic measuring system according to claim 3, **characterized in that** the automatic focussing subsystem comprises a mixed analogic/digital loop for controlling a position of the motor (45), the control circuit comprising:

a circuit based on EPROM (37) including calculating means for digitally calculating a reference position of a distance between a contact wire and a camera lens (62), from which a distance between the camera lens (62) and the CCD sensor is calculated, thus providing a calculated signal;

comparing means for comparing the calculated signal with a measured signal provided by measuring means;

subtracting means for generating a difference signal resulting from subtracting the measured signal from the calculated signal;

means for applying the difference signal to the motor (45) forcing both compared signals, the calculated signal and the measured signal to be equal, whereby the frame (24) is correctly placed for automatically focusing.

5. An automatic measuring system according to claim 4,

**characterized in that** the mixed analogic/digital loop comprises:

a compensator of dead spots (43) of the motor (45);

a direct current/direct current converter (44) of the motor (45);

a differential encoder (46);

a detector (47) of direction of rotation of the motor (45);

a meter (49) provided with

two inputs, an ascending-descending count control input and a clock input;

an output;

a digital/analog converter (50);

an adjuster (51);

a comparator (52) provided with a first input and a second input;

the differential encoder (46) having

an input connected to the motor (45) so as to pulses be generated when the motor turns for indicating the relative position of the frame (24) with regard to an initial focus position obtained manually;

an output connected to the detector (47), said detector (47) being connected to two inputs of

the meter (49), wherein the calculated signal has been previously loaded after carrying out an initial focusing, so as to obtain in the meter (49) output a signal proportional to a position the motor has with regard to an initial position of the frame, said signal being applied to an input of

the digital/analog converter (50) with an output connected to the first input of

the comparator (52), which receives the on the second input an analogic signal of a distance between the camera lens (62) and the CCD sensor in each moment, the comparator (52) providing a difference signal that, after passing through the adjuster (51) and the compensator of dead spots (43), is applied as a speed signal to

the direct current/direct current converter (44) for controlling rotation of the motor (45) so as to position the frame in a suitable point to focus.

6. An automatic measuring system according to claim 1, **characterized in that** a feed subsystem comprises

a plurality of voltage sources (55) connected to

a network by means of suitable filters,
a voltage sources control circuit (56) and to

a supervision circuit (57), the voltage sources control circuit (56) and the supervision circuit (57) being connected to

a state memorizing circuit (58), that in turn is connected to

a time starting circuit (59) and to
a display (60) ;

so as to

upon connecting the feed subsystem, a temporized initiation be produced during which the sources (55) do not have output voltages to avoid initial transient from influencing said output,

after carrying out the initiation, the voltage sources be activated and a period of time afterwards, the supervision circuit, for ensuring that the supervision circuit functions when all the voltages are established,

deactivate all voltage sources if an anomaly is produced in one of the voltage sources, all incidences being indicated optically.

7. An automatic measuring system according to claim 6,

**characterized in that** the voltage sources control circuit (56) is enabled to be connected to a sequential starting circuit (61), said sequential starting circuit (61) being enabled to be connected to at least one voltage source (55) that is not connected to the control circuit (56) for carrying out a sequential starting.

8. An automatic measuring system according to claim 7, **characterized in that** a sequential starting is applied to the laser lighting subsystem (1).

9. An automatic measuring system according to claim 1, **characterized in that** the image processing subsystem

acts independently of the speed of the car in which it is installed, always taking a same number of images per second;

said number of images per second being available to be varied so as to obtain a desired number of images per unit of length.

10. An automatic measuring system according to claim 1, **characterized in that** the image processing subsystem comprises a plurality of transputers that operate in bridge and that are connected to a personal computer for communicating with an operator, each connection line being divided in four image processing levels, said image processing levels being comprising

a first level to detect images of each camera eliminating a portion of an image that does not contain data;

a second level for measuring detected data, the second level comprising fewer transputers than the first level;

a third composition level for classifying data processed in the previous level, since in order to obtain a greater processing speed, data are processed in any order in the previous levels;

a fourth level for

recording history,
supervision controlling and
controlling an entire network,

said fourth level being the only level which communicates with the personal computer.

11. An automatic measuring system according to claim 10, **characterized in that** each measuring transputer of the first level is communicated with two transputers of the second level

end transputers of the first level being communicated with two transputers of the second level farthest away from each other;

using the most direct communication line except · said line is busy;

taking advantage of an under-used transputer since when data is in one end, normally there is no data in the other end;

said arrangement increasing speed and capacity of the system.

12. An automatic measuring system according to claim 10,

**characterized in that** the image processing subsystem is connected to a plurality of auxiliary peripherals comprising:

> an analog/digital converter for receiving a height measurement ;
> a plurality of link buffers of the CCD cameras;
> a digital/analog converter for automatic focusing;
> a kilometric point meter, so as to obtain a real data associated to a position on the track.

13. An automatic measuring system according to claim 10,
**characterized in that** the image processing subsystem is provided with a fifth management level of inputs/outputs for managing peripherals.

## Patentansprüche

1. Automatisches Messsystem zum Messen des Verschleißes von Fahrleitungsdrähten von dem Typ, der auf Eisenbahnstrecken verwendet wird, bei dem Laserstrahlen verwendet werden, die auf einen unteren Teil wenigstens eines Kabels der Fahrleitung fallen, an dem Stromabnehmer von Lokomotiven aufliegen und an dem die Laserstrahlen reflektiert werden;
wobei die Laserstrahlen von einer Vielzahl von Kameras erfasst werden, die in einem Bilderfassungssystem (2) installiert sind, und die Kameras mit CCD-Sensoren und Kameraobjektiven (62) versehen sind;
die CCD-Kameras mittels eines automatischen Fokussier-Teilsystems automatisch auf die Fahrleitung fokussieren;
ein Bildbearbeitungs-Teilsystem ein erfasstes Bild verarbeitet, um die Breite einer Verschleißfläche zu bestimmen;
das System an einem Wagen angebracht ist, der auf einem zu prüfenden Weg entlang fährt, wobei ein Loch in der Decke des Wagens ausgebildet ist, um Beleuchtung und Erfassung des Bildes des wenigstens einen Kabels zu ermöglichen;
ein Laserbeleuchtungs-Teilsystem (1) eine Vielzahl identischer Module umfasst, die horizontal an Seiten der CCD-Kameras angeordnet sind;
jedes Modul aus einer Laserdiode (13) besteht, deren Emission von Licht auf einer vertikalen Ebene mittels einer planzylindrischen Sammellinse (7) erzeugt wird, auf die zwei Linsen (7) in einer horizontalen Ebene folgen, um Streuung zu gewährleisten, die in der Ebene erforderlich ist;
ein Strahl, der von dem Laserbeleuchtungs-Teilsystem (1) emittiert wird, einem Lichtweg folgt, der unabhängig von einem Lichtweg ist, dem ein Strahl folgt, der von dem Bilderfassungs-Teilsystem (2) empfangen wird;
**dadurch gekennzeichnet, dass** das Bilderfassungs-Tellsystem (2) umfasst:

> eine Vielzahl von CCD-Kameras;
>
> eine Vielzahl erster Oberflächenspiegel (25);

wobei
sich jede CCD-Kamera gegenüber jedem ersten Oberflächenspiegel (25) befindet;
jeder erste Oberflächenspiegel (25) auf einer Auflage (63) in 45° auf einem Material angeordnet ist, die versehen ist mit:

> einer Dämpfungseinrichtung zum Absorbieren von Schwingungen; und
>
> einer Einstelleinrichtung, die anschließende Feineinstellungen ermöglicht,

wobei jede CCD-Kamera versehen ist mit:

> einem Labyrinth (21) zwischen dem Kameraobjektiv (62) und dem CCD-Sensor, das gewährleistet, dass Licht, das zu dem CCD-Sensor gelangt, von dem Kameraobjektiv (62) kommt, ohne dass es möglich ist, das anderes verfügbares Licht zu ihm gelangt;
>
> eine Vielzahl von Interferenzfiltern (23) zwischen dem Labyrinth (21) und dem CCD-Sensor, die nur Strahlung, die in einem Durchlassband derselben enthalten ist, zu dem Sensor gelangen lässt, wobei die Strahlung für jede Kamera spezifisch ist.

2. Automatisches Messsystem nach Anspruch 1, **dadurch gekennzeichnet, dass** ein Strahl, der von den zwei Linsen (7) projiziert wird, von Spiegeln (9, 10, 11) geführt, einem Zickzack-Lichtweg folgt, um:

> den Lichtweg zu verlängern, so dass seine Größe sich dazu eignet, einen Bereich zu beleuchten, der jedem Modul entspricht;
>
> minimale Abstände zwischen Komponenten des Systems zu erzielen, um so eine bessere Nutzung des Raums zu erreichen.

3. Automatisches Messsystem nach Anspruch 1, **dadurch gekennzeichnet, dass** das automatische Fokussier-Teilsystem einen Gleichstrommotor (45) umfasst, der:

> von Hand oder automatisch von einer Steuerschaltung betrieben werden kann,
>
> mittels einer Schnecke (30) mit einem Rahmen (24) verbunden ist, um den Rahmen (24) zu bewegen, an dem sich eine Vielzahl von Plattformen (31) befindet, die die Kameras tragen,

wobei jede der Plattformen (31) an einem einzelnen Schlitten (26) angebracht ist, der von Hand mittels einer Vielzahl von Posltionier-Bedienelementen (27, 28, 29) zur anfänglichen Einstellung in drei Achsen betätigt werden kann, um:

die manuelle oder automatische Ausführung einer anfänglichen Fokussierung zu ermöglichen,

ein optisches Erfassungssystem so einzustellen, dass sich die Sichtfelder der Kameras geringfügig überlappen,

um dann das Umschalten der Steuerschaltung auf Betrieb zum automatischen Fokussieren gleichzeitig für alle Kameras zu ermöglichen.

4. Automatisches Messsystem nach Anspruch 3, **dadurch gekennzeichnet, dass** das automatische Fokussier-Teilsystem eine gemischte Analog/Digital-Schleife zum Steuern einer Position des Motors (45) umfasst, wobei die Steuerschaltung umfasst:

eine auf EPROM (37) basierende Schaltung, die eine Berechnungseinrichtung zum digitalen Berechnen einer Bezugsposition eines Abstandes zwischen einem Fahrleitungsdraht und einem Kameraobjektiv (62) enthält, anhand der ein Abstand zwischen dem Kameraobjektiv (62) und dem CCD-Sensor berechnet wird, so dass ein berechnetes Signal bereitgestellt wird;

eine Vergleichseinrichtung zum Vergleichen des berechneten Signals mit einem gemessenen Signal, das von einer Messeinrichtung bereitgestellt wird;

eine Subtrahiereinrichtung, die ein Differenzsignal erzeugt, das durch Subtrahieren des gemessenen Signals von dem berechneten Signal entsteht;

eine Einrichtung zum Anlegen des Differenzsignals an den Motor (45), wobei beide verglichenen Signale, d.h. das berechnete Signal und das gemessene Signal, gezwungen werden, gleich zu sein, so dass der Rahmen (24) richtig zum automatischen Fokussieren angeordnet wird.

5. Automatisches Messsystem nach Anspruch 4, **dadurch gekennzeichnet, dass** die gemischte Analog/Digital-Schleife umfasst:

eine Kompensationseinrichtung für Totpunkte (43) des Motors (45);

einen Gleichstromumrichter (44) des Motors (45);

einen Differenzkodierer (46);

einen Detektor (47) für die Drehrichtung des Motors (45);

eine Messeinrichtung (49), die versehen ist mit:

zwei Eingängen, einem Aufwärts-Abwärts-Zähl-Steuereingang und einem Takteingang;

einem Ausgang;

einen Digital-/Analog-Wandler (50);

eine Einstellvorrichtung (51);

einen Komparator (52), der mit einem ersten Eingang und einem zweiten Eingang versehen ist;

wobei der Differenzkodierer (46) aufweist:

einen Eingang, der mit dem Motor (45) verbunden ist, so dass Impulse erzeugt werden, wenn sich der Motor dreht, um die relative Position des Rahmens (24) in Bezug auf eine anfängliche Fokusposition anzuzeigen, die manuell erreicht wird;

einen Ausgang, der mit dem Detektor (47) verbunden ist, wobei der Detektor (47) mit zwei Eingängen verbunden ist von:

der Messeinrichtung (49), wobei das berechnete Signal im Voraus geladen worden ist, nachdem eine anfängliche Fokussierung durchgeführt wurde, um so am Ausgang der Messeinrichtung (49) ein Signal zu erreichen, das proportional zu einer Position ist, die der Motor in Bezug auf eine Anfangsposition des Rahmens hat, wobei das Signal angelegt wird an einen Ausgang des:

Digital-/Analog-Wandlers (50) mit einem Ausgang, der verbunden ist mit dem ersten Eingang des:

Komparators (52), der an dem zweiten Eingang ein analoges Signal eines Abstandes zwischen dem Kameraobjektiv (62) und dem CCD-Sensor in jedem Moment empfängt, wobei der Komparator (52) ein Differenzsignal bereitstellt, das, nachdem es durch die Einstelleinrichtung (51) und die Kompensationseinrichtung für tote Punkte (42) hindurchgeleitet wurde, als ein Geschwindigkeitssignal angelegt wird an:

den Gleichstromumrichter (44), um Drehung des Motors (45) so zu steuern, dass der Rahmen an einem geeigneten Fokuspunkt positioniert wird.

6. Automatisches Messsystem nach Anspruch 1, **dadurch gekennzeichnet, dass** ein Speise-Teilsystem umfasst:

eine Vielzahl von Spannungsquellen (55), die verbunden sind mit:

einem Netz mittels geeigneter Filter,

einer Spannungsquellen-Steuerschaltung (56) und mit

einer Überwachungsschaltung (57), wobei die Spannungsquellen-Steuerschaltung (56) und die Überwachungsschaltung (57) verbunden sind mit:

einer Zustands-Speicherschaltung (58), die ihrerseits verbunden ist mit:

einer Zeit-Anfangsschaltung (59) und mit:

einer Anzeigeeinrichtung (60);

so dass:

beim Verbinden des Speise-Teilsystems eine zeitlich begrenzte Initialisierung erzeugt wird, während der die Quellen (55) keine Ausgangsspannungen haben, um zu verhindern, dass anfänglicher Stoß den Ausgang beeinflusst,

nachdem die Initialisierung ausgeführt worden ist, die Spannungsquellen und nach einem Zeitraum danach die Überwachungsschaltung aktiviert werden, um zu gewährleisten, dass die Überwachungsschaltung arbeitet, wenn alle Spannungen hergestellt sind,

alle Spannungsquellen deaktiviert werden, wenn eine Anomalie in einer der Spannungsquellen erzeugt wird, wobei alle Vorfälle optisch angezeigt werden.

7. Automatisches Messsystem nach Anspruch 6, **dadurch gekennzeichnet, dass** die Spannungsquellen-Steuerschaltung (56) mit einer Schaltung (61) zum sequentiellen Starten verbunden werden kann, wobei die Schaltung (61) zum sequentiellen Starten mit wenigstens einer Spannungsquelle (55) verbunden werden kann, die nicht mit der Steuerschaltung (56) verbunden ist, um ein sequentielles Starten auszuführen.

8. Automatisches Messsystem nach Anspruch 7, **dadurch gekennzeichnet, dass** ein sequentielles Starten bei dem Laserbeleuchtungs-Teilsystem (1) eingesetzt wird.

9. Automatisches Messsystem nach Anspruch 1, **dadurch gekennzeichnet, dass** das Bildverarbeitungs-Teilsystem unabhängig von der Geschwindigkeit des Wagens arbeitet, in dem es installiert ist, und stets eine gleiche Anzahl von Bildern pro Sekunde aufnimmt; wobei die Anzahl von Bildern pro Sekunde, die verfügbar sind, verändert wird, um eine gewünschte Anzahl an Bildern pro Längeneinheit zu erhalten.

10. Automatisches Messsystem nach Anspruch 1, **dadurch gekennzeichnet, dass** das Bildverarbeitungs-Teilsystem eine Vielzahl von Transputern umfasst, die in Brückenbetrieb arbeiten und die zur Kommunikation mit einer Bedienungsperson mit einem Personalcomputer verbunden sind, wobei jede Verbindungsleitung in vier Bildverarbeitungsebenen unterteilt ist und die Bildverarbeitungsebenen umfassen:

eine erste Ebene zum Erkennen von Bildern jeder Kamera, wobei ein Teil eines Bildes gelöscht wird, der keine Daten enthält;

eine zweite Ebene zum Messen erkannter Daten, wobei die zweite Ebene weniger Transputer als die erste Ebene enthält;

eine dritte Aufbereitungsebene zum Klassifizieren von auf der vorangehenden Ebene verarbeiteten Daten, da, um eine größere Verarbeitungsgeschwindigkeit zu erhalten, Daten in jeder beliebigen Reihenfolge auf den vorhergehenden Ebenen verarbeitet werden;

eine vierte Ebene zum:

Aufzeichnen von Verlauf, Durchführung von Überwachungssteuerung und

Steuerung eines gesamten Netzes,

wobei die vierte Ebene die einzige Ebene ist, die mit dem Personal Computer kommuniziert.

11. Automatisches Messsystem nach Anspruch 10, **dadurch gekennzeichnet, dass** jeder Mess-Transputer der ersten Ebenen mit zwei Transputern der zweiten Ebene in Verbindung steht, wobei Abschlusstransputer der ersten Ebene mit zwei Transputern der zweiten Ebene in Verbindung stehen, die am weitesten voneinander entfernt sind, die direkteste Kommunikationsleitung verwendet wird, wenn diese Leitung nicht belegt ist; ein nicht ausgelasteter Transputer genützt wird, da, wenn sich Daten an einem Ende befinden, sich normalerweise keine Daten am anderen Ende befinden; wobei mit der Anordnung Geschwindigkeit und Kapazität des System erhöht werden.

12. Automatisches Messsystem nach Anspruch 10, **dadurch gekennzeichnet, dass** das Bildverarbeitungs-Teilsystem mit einer Vielzahl von Zusatz-Peripherieeinrichtungen verbunden ist, die umfassen:

einen Analog-/Digital-Wandler zum Empfangen einer Höhenmessung;

eine Vielzahl von Verknüpfungspuffern der CCD-Kameras;

einen Digital-/Analog-Wandler zum automatischen Fokussieren;

eine Kilometerpunkt-Messeinrichtung, um Echtzahlendaten im Zusammenhang mit einer Position auf der Strecke zu erhalten.

13. Automatisches Messsystem nach Anspruch 10, **dadurch gekennzeichnet, dass** das Bildverarbeitungs-Teilsystem mit einer fünften Verwaltungsebene von Eingängen/Ausgängen zum Verwalten von Peripherieeinrichtungen versehen ist.

### Revendications

1. Système de mesure automatique pour la mesure de l'usure de fils de contact de distribution aérienne, de type utilisé dans des lignes de chemins de fer, utilisant des rayons laser qui tombent sur une partie inférieure d'au moins un câble de la distribution aérienne, contre lequel des pantographes de locomotives s'appliquent et sur lequel lesdits rayons lasers sont réfléchis;

les rayons laser étant captés par une pluralité d'appareils de prise de vues installés dans un sous-système de captage d'images (2), les appareils de prise de vues étant pourvus de capteurs CCD et d'objectifs (62) d'appareils de prise de vues;

lesdits appareils de prise de vues CCD réalisant une mise au point -automatique sur la distribution aérienne à l'aide d'un sous-système de mise au point automatique;

un sous-système de traitement d'images traitant une image captée pour déterminer la largeur d'une surface usée;

le système étant monté sur un véhicule qui circule le long d'un trajet devant être inspecté, un trou dans le plan du véhicule étant formé pour permettre l'éclairement et le captage de l'image du au moins un câble;

un sous-système d'éclairage laser (1) comprenant une pluralité de modules identiques disposés horizontalement sur les côtés des appareils de prise de vues CCD;

chaque module étant constitué par une diode laser (13), dont l'émission de lumière est formée dans un plan vertical au moyen d'une lentille plan-cylindrique convergente (6) suivie de deux lentilles (7) dans un plan horizontal pour garantir une divergence requise dans ledit plan;

un faisceau émis par le sous-système d'éclairage laser (1) suivant un trajet optique indépendamment d'un trajet optique suivi par un faisceau reçu par le sous-système de captage d'image (2);

**caractérisé en ce que** le sous-système de captage d'image (2) comprend une pluralité d'appareils de prise de vues CCD;

une pluralité de premiers miroirs de surface (25); dans lequel

chaque appareil de prise de vues CCD étant situé à l'opposé de chaque premier miroir de surface (25);

chaque premier miroir de surface (25) est placé sur un support (63) à 45° sur un matériau pourvu de moyens d'amortissement servant à absorber des vibrations; et

des moyens d'ajustement pour permettre des ajustements ultérieurs précis;

chaque appareil de prise de vues CCD étant pourvu

d'un labyrinthe (21) situé entre l'objectif (22) de l'appareil de prise de vues et le capteur CCD pour garantir que la lumière atteignant le capteur CCD provient de la lentille (62) de l'appareil de prise de vues sans qu'il soit possible qu'une autre lumière disponible l'atteigne;

une pluralité de filtres interférentiels (23) situé entre le labyrinthe (21) et le capteur CCD pour permettre seulement à un rayonnement situé dans une bande passante de ces filtres d'atteindre le capteur, ledit rayonnement étant spécifique à chaque appareil de prise de vues.

2. Système de mesure automatique selon la revendication 1, **caractérisé en ce qu'**un faisceau qui sort des deux lentilles (7) suit un trajet optique en zigzag en étant guidé par les miroirs (9, 10, 11),

allonger le trajet optique de telle sorte que sa taille convient pour l'éclairement d'une surface correspondant à chaque module;

obtenir des distances minimales entre des composants du système afin de réaliser une meilleure utilisation de l'espace.

3. Système de mesure automatique selon la revendication 1, **caractérisé en ce que** le sous-système de mise au point automatique comprend un moteur à courant continu (15)

apte à être actionné manuellement ou automatiquement par un circuit de commande,

connecté au moyen d'une vis sans fin (30) à un cadre (24) de manière à déplacer le cadre (24), la où une pluralité de plateformes (31) supportant les appareils de prise de vues sont situées,

chaque desdites plateformes (31) étant montée sur un chariot individuel (26) pouvant être actionné manuellement à l'aide d'une pluralité d'organes de commande de positionnement (27, 28, 39) suivant trois axes pour un ajustement initial, pour

permettre l'exécution manuelle ou automatique d'une mise au point initiale,

ajuster un système de captage optique qui chevauche légèrement les champs de vision des appareils de prise de vues,

de manière à permettre une commutation simultanée du circuit de commande fonctionnant dans le mode de mise au point automatique pour l'ensemble des appareils de prise de vues.

4. Système de mesure automatique selon la revendication 3, **caractérisé en ce que** le sous-système de mise au point automatique comprend une boucle analogique/numérique mixte pour commander une position du moteur (45), le circuit de commande comprenant:

un circuit basé sur une mémoire EEPROM (37) incluant des moyens de calcul pour calculer numériquement une position de référence d'une distance entre un fil de contact et un objectif (62) d'appareil de prise de vues (62) et à partir de laquelle une distance entre l'objectif (62) de l'appareil de prise de vues et le capteur CCD est calculée, ce qui fournit ainsi un signal calculé;

des moyens comparateurs pour comparer le signal calculé à un signal mesuré délivré par des moyens de mesure;

des moyens de soustraction pour produire un signal de différence résultant de la soustraction du signal mesuré, du signal calculé;

des moyens pour appliquer le signal de différence au moteur (45) rendant égaux de façon forcé les deux signaux comparés, le signal calculé et le signal mesuré, ce qui a pour effet que le cadre (24) est correctement positionné pour une mise au point automatique.

5. Système de mesure automatique selon la revendication 4, **caractérisé en ce que** la boucle analogique/numérique mixte comprend:

un compensateur de plages d'inactivité (43) du moteur (45);

un convertisseur continu/continu (44) du moteur (45);

un codeur différentiel (46);

un détecteur (47) du sens de rotation du moteur (45);

un appareil de mesure (49) équipé de

deux entrées, une entrée de commande de comptage progressif/régressif et une entrée de signal d'horloge;

une sortie;

un convertisseur numérique/analogique (50);

un dispositif d'ajustement (51);

un comparateur (52) équipé d'une première entrée et d'une seconde entrée;

le codeur différentiel (46) possédant

une entrée connectée au moteur (45) pour produire des impulsions lorsque les signaux du moteur pour indiquer la position relative du cadre (24) par rapport à une position de mise au point initiale obtenue manuellement;

une sortie connectée au détecteur (47), ledit détecteur (47) étant connectée à deux entrées de l'appareil de mesure (49), le signal calculé ayant été chargé antérieurement après l'exécution d'une mise au point initial, de manière à obtenir à la sortie de l'appareil de mesure (49) un signal proportionnel à une position, que le moteur possède par rapport à une position initiale du cadre, ledit signal étant appliqué à une entrée d'un convertisseur numérique/analogique (50) comportant une sortie connectée à la première entrée du

comparateur (52) qui reçoit à tout moment sur la seconde entrée un signal analogique d'une distance entre l'objectif (62) de l'appareil de prise de vues et le capteur CCD, le comparateur (52) délivrant un signal de différence qui, après avoir traversé le dispositif d'ajustement (51) et le compensateur de plages d'inactivité (43), est appliqué en tant que signal de vitesse au convertisseur continu/continu (44) pour commander la rotation du moteur (45) de manière à positionner le cadre en un point approprié pour la mise au point.

6. Système de mesure automatique selon la revendication 1, **caractérisé en ce qu'**un sous-système d'alimentation comprend

une pluralité de source de tension (55) connectées à

un réseau au moyen de filtres appropriés,

un circuit (56) de commande de sources de tension et à

un circuit de supervision (57), le circuit (56) de commande des sources de tension et le circuit de supervision (57) étant connectés à

un circuit de mémorisation d'états (58), qui à son tour est connecté à

un circuit de démarrage de temps (59) et à

un dispositif d'affichage (60); de telle sorte que

lors du raccordement du sous-système d'alimentation, un déclenchement temporisé est produit, lors duquel les sources (55) ne délivrent pas de tensions de sortie pour éviter qu'un phénomène transitoire initial n'influence ledit signal de sortie,

une fois réalisé le déclenchement, les sources de tension sont activées et au bout d'un intervalle de temps le circuit de supervision est activé, afin de garantir que le circuit de supervision fonctionne lorsque toutes les tensions sont établies,

désactiver toutes les sources de tension si une anomalie apparaît dans l'une des sources de tension, toutes les incidences étant indiquées optiquement.

7. Système de mesure automatique selon la revendication 6, **caractérisé en ce que** le circuit (56) de commande des sources de tension est validé pour être connecté à un circuit de démarrage séquentiel (61), ledit circuit de démarrage séquentiel (61) étant validé de manière à être connecté à au moins une source de tension (55), qui n'est pas connectée au circuit de commande (56) pour l'exécution d'un démarrage séquentiel.

8. Système de mesure automatique selon la revendication 7, **caractérisé en ce qu'**un démarrage séquentiel est appliqué au sous-système d'éclairage par laser (1).

9. Système de mesure automatique selon la revendication 1, **caractérisé en ce que** le sous-système de traitement d'images

agit d'une manière indépendante de la vitesse du véhicule, dans lequel il est installé, en prenant toujours le même nombre d'images par seconde;

ledit nombre d'images par seconde pouvant être modifié pour l'obtention d'un nombre désiré d'images par unité de longueur.

10. Système de mesure automatique selon la revendication 1, **caractérisé en ce que** le sous-système de traitement comprend une pluralité de transputeurs qui fonctionnent en pont et qui sont connectés à un ordinateur personnel pour communiquer avec un opérateur, chaque ligne de connexion étant divisée en quatre niveaux de traitement d'images, lesdits niveaux de traitement d'images comprenant un premier niveau pour détecter des images de chaque appareil de prise de vues en supprimant une partie d'une image qui ne contient pas de données;

un second niveau pour la mesure de données détectées, le second niveau comprend un moins nombre de transputeurs que le premier niveau;

un troisième niveau de composition pour classer des données traitées dans le niveau précédent, étant donné que pour obtenir une vitesse de traitement supérieure, des données sont traitées dans n'importe quel ordre dans les niveaux précédents;

un quatrième niveau pour

enregistrer un historique,

commander une supervision, et

commander un réseau complet,

ledit quatrième niveau étant le seul niveau qui communique avec l'ordinateur personnel.

11. Système de mesure automatique selon la revendication 10, **caractérisé en ce que** chaque transputeur de mesure du premier niveau communique avec deux transputeurs du second niveau,

des transputeurs finals du premier niveau communiquant avec deux transputeurs du second niveau éloignés au maximum l'un de l'autre;

moyennant l'utilisation de la ligne de communication la plus directe hormis lorsque la ligne est occupée;

en tirant parti d'un transducteur sous-utilisé étant donné que lorsque des données sont présentes à une extrémité, normalement il n'existe aucune donnée à l'autre extrémité;

ledit agencement augmentant la vitesse et la capacité du système.

12. Système de mesure automatique selon la revendication 10, **caractérisé en ce que** le sous-système de traitement d'images est connecté à une pluralité de périphériques auxiliaires, comprenant:

un convertisseur analogique/numérique pour recevoir une mesure de hauteur;

une pluralité de tampons de liaison des appareils de prise de vues CCD;

un convertisseur numérique/analogique pour la mise au point automatique;
un appareil de mesure de bornes kilométriques pour obtenir des données réelles associées à une position sur la voie.

13. Système de mesure automatique selon la revendication 10, **caractérisé en ce que** le sous-système de traitement d'image est pourvu d'un cinquième niveau de gestion d'entrées et de sorties pour la gestion de périphériques.

FIG.1

FIG.2

Radiation

FIG.3

21

32

## FIG.4

23

22

64

## FIG.5

FIG.6

FIG.7

FIG.8